Europäisches Patentamt

**European Patent Office**

Office européen des brevets

(11) Numéro de publication: **0 285 488**
**A1**

## DEMANDE DE BREVET EUROPEEN

(21) Numéro de dépôt: **88400623.0**

(22) Date de dépôt: **16.03.88**

(51) Int. Cl.⁴: **F 21 Q 3/00**
**B 64 F 1/20**

(30) Priorité: **01.04.87 FR 8704571**

(43) Date de publication de la demande:
**05.10.88 Bulletin 88/40**

(84) Etats contractants désignés:
**AT BE CH DE ES FR GB GR IT LI LU NL SE**

(71) Demandeur: **Société EUROPHANE**
**156, boulevard Haussmann**
**F-75008 Paris (FR)**

(72) Inventeur: **Pannier, Daniel**
**13, rue Sadi Carnot**
**F-27700 Les Andelys (FR)**

(74) Mandataire: **Bertrand, Didier et al**
**Cabinet Beau de Loménie 55, rue d'Amsterdam**
**F-75008 Paris (FR)**

(54) **Feu encastrable de balisage de piste, à bloc optique amovible.**

(57) Ce feu encastrable de balisage de piste d'aérodome comporte une embase (1) encastrable, un couvercle (9) fixé sur l'embase, et un bloc optique amovible (31) à travers une ouverture centrale du couvercle, et logé, dans sa position de fonctionnement, de manière à être au même niveau supérieur que le couvercle (9).

Il est prévu dans le feu des moyens de guidage en translation verticale (22,23,36,37) du bloc optique (31), et des moyens (42,29) de solidarisation du bloc optique (31) et du feu agencés de manière que l'actionnement en solidarisation ou en désolidarisation desdits moyens (42,29) entraîne une translation verticale descendante ou ascendante du bloc (31) entre une position de préhension où le bloc (31) dépasse du niveau supérieur du couvercle (9) suffisamment pour être saisi et extrait et sa position de fonctionnement, et vice-versa.

EP 0 285 488 A1

## Description

**Feu encastrable de balisage de piste, à bloc optique amovible**

L'invention concerne un feu encastrable de balisage de piste d'aérodrome ou similaire.

On connaît des feux de balisages constitués d'une embase encastrable, d'un couvercle fixé sur l'embase et intégrant généralement un prisme uni ou bidirectionnel, et d'un bloc optique comportant notamment la lampe du feu.

Dans ces feux, le changement de lampe ou de filtre coloré (opérations de maintenance relativement fréquente) imposent le démontage de nombreux écrous et le soulèvement d'un ensemble couvercle plus bloc optique très lourd (par exemple 8 à 9 kg, en raison de l'acier dont il est constitué) : ceci expose de plus le socle scellé à une pénétration de corps étrangers (eau, poussières, cailloux,...) d'autant plus grande que la surface découverte est importante, risquant de nuire à la conservation de l'étanchéïté lors du remontage.

On a proposé de rendre le bloc optique amovible indépendamment du couvercle à travers une ouverture centrale du couvercle, mais son extraction est très difficile et nécessite des instruments adaptés et la création de "prises" sur le bloc, car, dans sa position de fonctionnement, le bloc optique doit être au même niveau supérieur que le couvercle et ne peut donc être saisi aisément. Ces "prises" forment des aspérités de surface abrasives pour les pneus des avions qui viennent à y rouler.

L'invention a pour but de proposer un feu à bloc optique amovible où les interventions sont particulièrement faciles, et ne présentent pas les inconvénients précités.

Selon l'invention, il est prévu dans le feu des moyens de guidage en translation verticale du bloc optique, et des moyens de solidarisation du bloc optique et du feu agencés de manière que l'actionnement en solidarisation ou en désolidarisation desdits moyens entraîne une translation verticale descendante ou ascendante du bloc entre une position de préhension où le bloc dépasse du niveau supérieur du couvercle suffisamment pour être saisi et extrait, et sa position de fonctionnement, et vice-versa.

Avantageusement, le bloc optique est globalement cylindrique et est reçu dans une ouverture globalement cylindrique dont le rapport de la profondeur au diamètre est d'au moins 1/2, et est de préférence voisin de 0,6 à 0,7. Ces proportions permettent de combattre les coïncements.

Mais selon une disposition originale particulièrement efficace pour éviter les coïncements, le bloc optique est globalement cylindrique et est reçu dans une ouverture globalement cylindrique, le bloc et l'ouverture comportant deux sections cylindriques distinctes respectivement de fond et de bord, séparées par une section intermédiaire en retrait, les diamètres des sections de fond étant inférieurs aux diamètres des sections de bord. Cette disposition permet d'assurer un guidage vertical très efficace sans coïncements.

Grâce au guidage vertical, il est possible d'adopter un moyen de solidarisation unique et excentré (l'excentrement étant rendu nécessaire du fait que le centre du bloc est occupé par la lampe) sans crainte des coïncements. Le moyen préféré est un simple système de vis et d'écrou.

Avantageusement, le moyen à vis-écrou comporte un écrou solidaire du couvercle coopérant avec une vis excentrée unique solidaire du bloc optique.

L'écrou peut être amovible. Quant à la vis, on la prévoit imperdable en la rendant prisonnière du bloc optique, par exemple par une plaque fixée au bloc optique.

Ainsi, le simple dévissage de la vis unique de solidarisation fait monter le bloc optique d'une hauteur suffisante pour l'extraire manuellement sans outil spécialisé.

D'autres caractéristiques et avantages ressortiront de la description suivante d'un mode préféré de réalisation. Il sera fait référence aux dessins annexés sur lesquels :

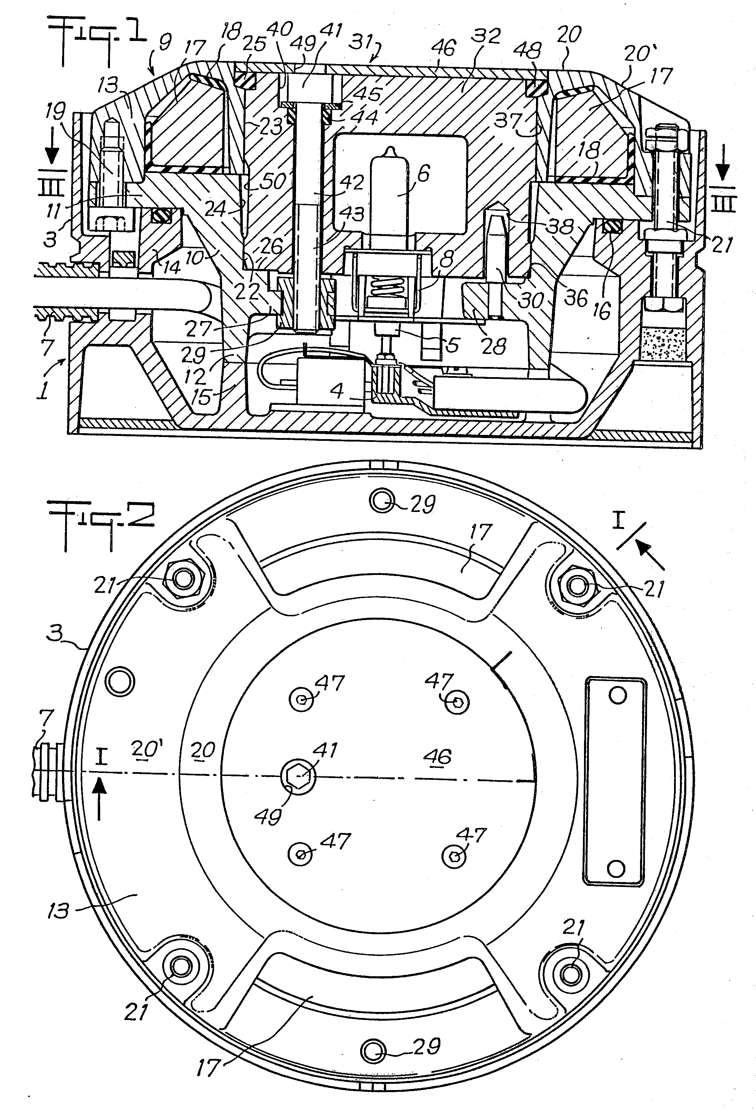

. la figure 1 est une vue en coupe verticale I-I d'un feu conforme à l'invention,

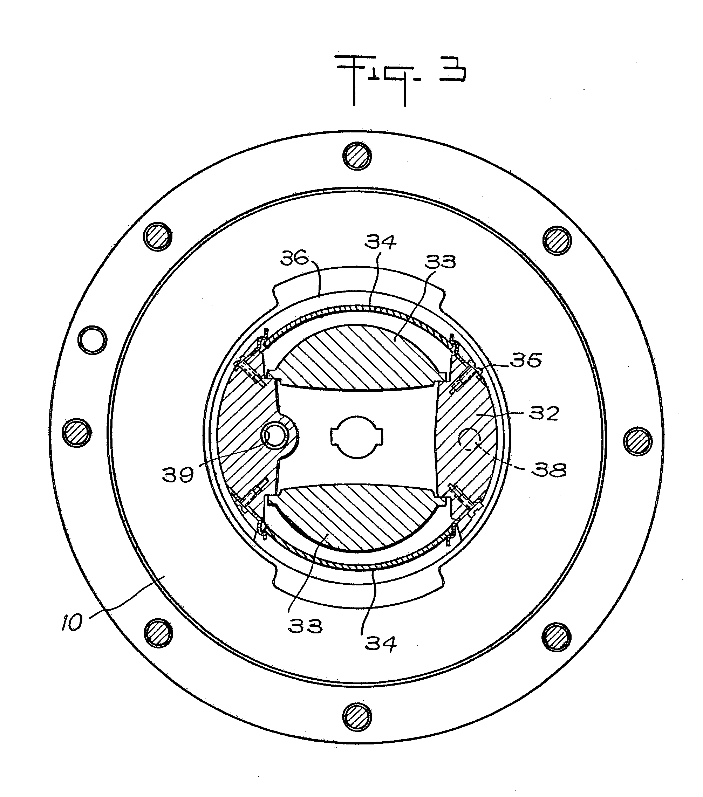

. la figure 2 est une vue de dessus de ce feu,

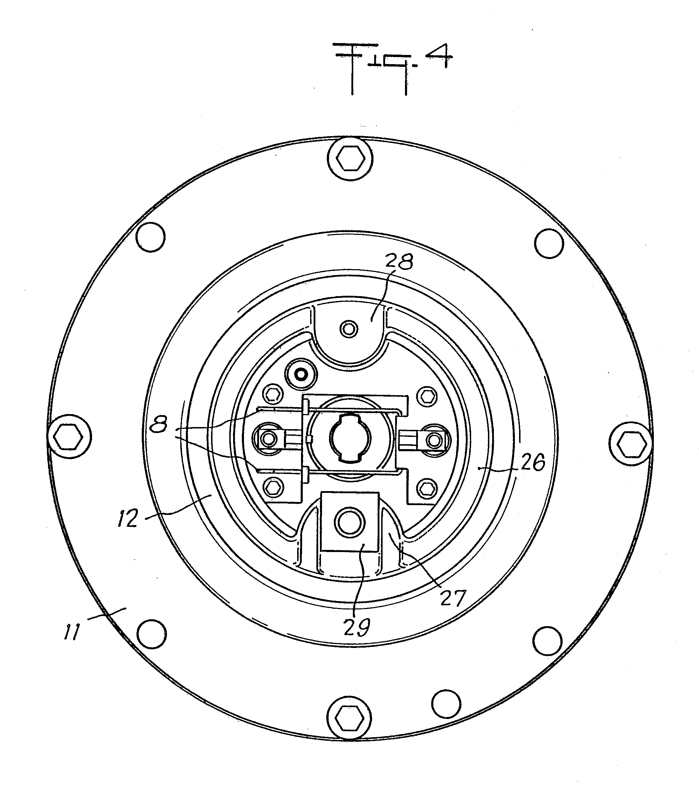

. la figure 3 est une vue en coupe horizontale III-III du feu de la figure 1.

. la figure 4 est une vue de dessous du plateau et du bloc optique.

Le feu comporte une embase 1 constituée d'un fond 2 et d'une paroi cylindrique 3, conformés de manière à offrir la résistance nécessaire et à loger une partie des équipements électriques du feu, à savoir notamment les contacts élastiques 4 destinés à recevoir en appui les contacts 5 de la lampe électrique 6 fixée par des moyens amovibles 8 au bloc optique. Les équipements électriques sont alimentés via un cordon 7 raccordé à l'extérieur du feu.

Le couvercle 9 est formé d'un plateau supérieur 13 et d'un plateau inférieur 10 reposant par une bride périphérique 11 et une nervure annulaire 12 sur un épaulement périphérique 14 et une nervure annulaire 15 de l'embase 1. Une étanchéïté torique 16 est prévue entre le plateau et le volume intérieur de l'embase.

Des éléments de prisme annulaires ou partiellement annulaires 17 sont disposés entre les plateaux inférieur 10 et supérieur 13 du couvercle au niveau de deux fenêtres opposées, avec interposition d'éléments d'étanchéïté élastiques 18. Des moyens de fixation 19 sont prévus pour solidariser les plateaux supérieur 13 et inférieur 10 périphériquement.

Des moyens de fixation 21 sont prévus pour fixer l'ensemble du couvercle 9 à l'embase 1.

Le plateau supérieur 13 dépasse d'une faible hauteur du bord supérieur de l'embase, en formant un anneau tronconique à faible pente 20' conduisant à une couronne horizontale 20.

Le couvercle 9 ménage en son centre une ouverture globalement cylindrique communiquant au fond avec le volume intérieur de l'embase 1.

L'ouverture globalement cylindrique comporte essentiellement deux sections cylindriques alésées à des diamètres différents : une section cylindrique de fond 22 et une section cylindrique de bord 23 dont le diamètre est légèrement supérieur à celui de la section de fond. Les sections 22,23 sont séparées par une section intermédiaire 24 sensiblement plus large que la section de fond 22.

La section de bord 23 est terminée par un épaulement oblique 25 élargissant l'ouverture.

La section de fond 22 est terminée par un épaulement de butée 26 s'étendant sur sensiblement toute la périphérie cylindrique.

A un niveau inférieur à celui de l'épaulement 26, deux saillies radiales 27,28 opposées partent vers l'intérieur de la nervure 12 du plateau inférieur 10. La saillie 27 comporte deux branches (cf. fig.4) entre lesquelles on peut venir radialement loger et bloquer un écrou 29. La saillie 28 comporte un orifice vertical recevant la queue d'une broche lisse chanfreinée 30.

Le bloc optique 31 comporte un corps globalement cylindrique 32 adapté à l'ouverture centrale du couvercle. Le corps 32 est creux pour contenir la lampe 6, et comporte deux fenêtres latérales sur lesquelles sont montées les lentilles de concentration lumineuse 33 et les filtres colorés 34, lesquels sont formés cylindriquement et assujettis au corps par des moyens de fixation démontables 35.

Le corps 32 comporte une section cylindrique complète ou sensiblement complète de fond 36, correspondant avec un très faible jeu à l'alésage de fond 22, et une section cylindrique complète ou sensiblement complète de bord 37, correspondant avec un relativement faible jeu à l'alésage de bord 23. Ce jeu est supérieur au jeu des sections de fond, compte tenu de l'imprécision relative du positionnement de la section de bord 23 par rapport à la section de fond 22 introduite par la fixation du plateau supérieur 13 (dans lequel est formée la section de bord) sur le plateau inférieur 10 (dans lequel est formée la section de fond). Ces sections 36,37 sont séparées par une section intermédiaire 50 de diamètre réduit.

Le fond du corps 32 est conformé de manière à pouvoir porter sur l'épaulement de butée 26, un léger chanfrein étant prévu au bord de la section de fond 36.

Dans le corps 32, en quadrature avec les dispositifs optiques, un épaississement de la paroi permet de prévoir deux orifices verticaux 38,39 radialement opposés.

L'orifice borgne 38 débouche sur le fond du corps et peut recevoir, avec jeu, la broche 30.

L'orifice traversant 39 est destiné à être aligné sur l'écrou 29 au dessus duquel il débouche dans le fond du corps. L'orifice 39 débouche vers le haut en formant un élargissement 40 destiné à loger la tête 41 d'une vis 42 dont le filetage 43 coopère avec le taraudage de l'écrou 29.

Une étanchéïté 44 et une rondelle 45 sont glissées sous la tête 41 de vis avant de bloquer en translation ladite tête de vis dans sa chambre 40 grâce à une plaque 46 d'acier inoxydable (comme le couvercle) fixée sur le bloc optique grâce à quatre vis 47 à six pans creux, avec interposition d'un joint d'étanchéïté périphérique 48. La plaque 46 comporte un trou 49 permettant d'accéder aux six pans creux de la tête 41 de vis 42. La plaque 46 est de niveau avec la couronne 20.

Le fonctionnement du dispositif de l'invention, pour extraire le bloc optique 31, est le suivant.

Il suffit de dévisser à l'aide d'une clef la vis 42 ce qui a pour effet, par réaction contre l'écrou fixe 29, de soulever l'ensemble du bloc optique 31, dont la verticalité est assurée et maintenue en permanence grâce aux deux alésages cylindriques 22,23. Une fois la vis 42 sortie de l'écrou, le bloc optique 31 dépasse suffisamment de la couronne 20 du couvercle pour pouvoir être saisi et extrait manuellement du couvercle 9. En raison de la différence de diamètre entre les alésages des sections de fond et de bord, le passage du bloc optique 31 à travers la section de bord 23 ne pose pas de problème.

La réinsertion du bloc optique 31 se fait par les opérations inverses. La broche 30 permet un positionnement sans ambiguïté du bloc optique 31 de manière que la vis 42 trouve tout de suite l'écrou 29. Pour les raisons déjà mentionnées, le passage du bloc optique 31 à travers la section de bord 23 se fait sans difficulté ; et lorsque le chanfrein de la section de fond 36 du bloc optique 31 attaque la section de fond 22 du couvercle, le glissement peut s'effectuer sans crainte de coincement, malgré le très faible jeu, en raison du parallélisme imposé par la présence des deux alésages, empêchant le bloc optique de prendre une inclinaison par rapport à l'axe des alésages, supérieure à celle qui donne naissance aux phénomènes d'arc-boutement.

Il est à observer que les contacts électriques de la lampe 6 se déconnectent automatiquement lors de l'éloignement du bloc optique 31 d'avec le couvercle 9.

Par ailleurs, on observera aussi que le bloc optique reporte parfaitement les charges qu'il reçoit sur l'épaulement 26 qui, via la nervure 12, les transmet à l'embase 1.

Un des avantages du mode de réalisation décrit réside dans le faible nombre d'aspérités créées à la surface du jeu. Les trous des vis 47 sont très petits et l'orifice 49 est unique. On réduit ainsi le caractère abrasif des feux pour les pneux des avions.

## Revendications

1. Feu encastrable de balisage de piste d'aérodome, du type comportant une embase (1) encastrable, un couvercle (9) fixé sur l'embase, et un bloc optique amovible (31) à travers une ouverture centrale du couvercle, et logé, dans sa position de fonctionnement, de manière à être au même niveau supérieur que le couvercle (9),
caractérisé en ce qu'il est prévu dans le feu des moyens de guidage en translation verticale (22,23,36,37) du bloc optique (31), et des moyens (42,29) de solidarisation du bloc optique (31) et du feu agencés de manière que l'actionnement en solidarisation ou en désolidarisation desdits moyens (42,29) entraîne une translation verticale descendante ou ascendante du bloc (31) entre une position de préhension où le bloc (31) dépasse du niveau supérieur du couvercle (9) suffisamment pour être saisi et extrait et sa position de fonctionnement, et vice-versa.

2. Feu selon la revendication 1, caractérisé en ce que le bloc optique (31) est globalement cylindrique et est reçu dans une ouverture globalement cylindrique dont le rapport de la profondeur au diamètre est d'au moins 1/2.

3. Feu selon l'une quelconque des revendications 1 ou 2, caractérisé en ce que le bloc optique (31) est globalement cylindrique et est reçu dans une ouverture globalement cylindrique, le bloc (31) et l'ouverture comportant deux sections cylindriques distinctes respectivement de fond (36,22) et de bord (37,23), séparées par une section intermédiaire en retrait (50,24), les diamètres des sections de fond (36,22) étant inférieurs aux diamètres des sections de bord (37,23).

4. Feu selon l'une quelconque des revendications 1 à 3, caractérisé en ce que les moyens de solidarisation (42,29) sont à vis et écrou.

5. Feu selon la revendication 4, caractérisé en ce que les moyens à vis-écrou (42,29) comportent un écrou (29) solidaire du couvercle (9) coopérant avec une vis excentrée (42) solidaire du bloc optique (31).

6. Feu selon la revendication 5, caractérisé en ce que l'écrou (29) est amovible.

7. Feu selon l'une quelconque des revendications 5 ou 6, caractérisé en ce que la vis (42) est rendue prisonnière du bloc optique par une plaque (46) fixée au bloc optique.

Fig.1

Fig.2

0285488

0285488

Fig. 3

0285488

# Fig.4

Office européen
des brevets

**RAPPORT DE RECHERCHE EUROPEENNE**

Numero de la demande

EP 88 40 0623

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-1 936 925 (BLISS) <br> * Page 6, lignes 13-15 * | 1 | F 21 Q 3/00 <br> B 64 F 1/20 |
| A | | 2,3 | |
| | --- | | |
| Y | US-A-3 535 504 (BEAL) <br> * Figures 1,2 * | 1 | |
| A | | 4,5 | |
| | --- | | |
| A | CH-A- 417 352 (WESTINGHOUSE) <br> * Figure 15 * | 1 | |
| | ----- | | |

DOMAINES TECHNIQUES RECHERCHES (Int. Cl.4)

F 21 Q
B 64 F

Le présent rapport a été établi pour toutes les revendications

| Lieu de la recherche | Date d'achèvement de la recherche | Examinateur |
|---|---|---|
| LA HAYE | 08-07-1988 | FOUCRAY R.B.F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.....................................................
& : membre de la même famille, document correspondant

EPO FORM 1503 03.82 (P0402)